# FASCICULE DE BREVET EUROPEEN

(11) **EP 0 857 891 B1**
(45) Date de publication et mention de la délivrance du brevet: **11.07.2001**
(21) Numéro de dépôt: 98400226.1
(22) Date de dépôt: 03.02.1998
(51) Int. Cl.: F16H 21/04

(54) **Dispositif de guidage en translation rectiligne d'un objet mobile par rapport à un objet fixe**
Einrichtung zur gradlinigen Führung eines bewegtes Teil gegenüber einem festen Teil
Rectilinear guide device of a mobile part in relation to a fixed part

(30) Priorité: 06.02.1997 FR 9701369
(43) Date de publication de la demande: 12.08.1998
(73) Titulaire: C.S.E.M. CENTRE SUISSE D'ELECTRONIQUE ET DE MICROTECHNIQUE SA, 2007 Neuchâtel (CH)
(72) Inventeur: Genequand, Pierre-Marcel, 75116 Paris (FR)
(74) Mandataire: Ballot, Paul

(56) Documents cités:
- EP-A- 0 384 947
- WO-A-91/14886
- GB-A- 2 233 925

## Description

La présente invention concerne un dispositif de guidage en translation rectiligne dans une direction donnée d'un objet mobile par rapport à un objet fixe.

D'une manière générale, dans les guidages à faible amplitude de déplacement, on utilise les propriétés des lames minces et allongées encastrées à une extrémité et sollicitées à l'autre extrémité, de se prêter aisément à un mouvement de flexion dans la direction perpendiculaire à la lame, tout en restant rigides dans les directions perpendiculaires.

Pour obtenir un mouvement de guidage en translation à partir des propriétés de flexion des lames minces, on peut réaliser un dispositif constitué par un parallélogramme comportant deux lames flexibles égales et parallèles, encastrées à une extrémité, et reliées à chacune de leurs autres extrémités à un élément rigide. Sous l'effet d'une sollicitation extérieure imposant aux lames minces un mouvement de flexion, l'élément rigide se déplace en restant parallèle à lui-même. On obtient ainsi un guidage en translation d'un objet mobile qui serait solidaire audit élément rigide par rapport à un objet fixe qui serait solidaire de l'encastrement des lames.

Lorsque les déformations sont calculées pour rester bien en-deçà des limites élastiques et des charges critiques de flambage, le dispositif ainsi réalisé est parfaitement précis et reproductible, sans jeu, sans frottement, sans usure et ne présentant pas de phénomènes de grippage. La reproductibilité n'est limitée que par l'hystéréris résiduelle appliquée aux effets non compensés dus à la variation des charges et à la rigidité finie des lames. A ces avantages, il faut ajouter la possibilité de réaliser des systèmes complexes en un nombre réduit de pièces monolithiques, ce qui contribue à améliorer la fiabilité et à diminuer les coûts d'assemblage.

Toutefois, la configuration en parallélogramme simple décrite ci-dessus ne constitue pas un guidage en translation rectiligne parfait. En effet, à la translation rectiligne proprement dite recherchée s'ajoute une composante d'erreur, perpendiculaire à la direction du mouvement, due au raccourcissement apparent des lames flexibles qui tend à rapprocher l'élément rigide du parallélogramme de l'encastrement.

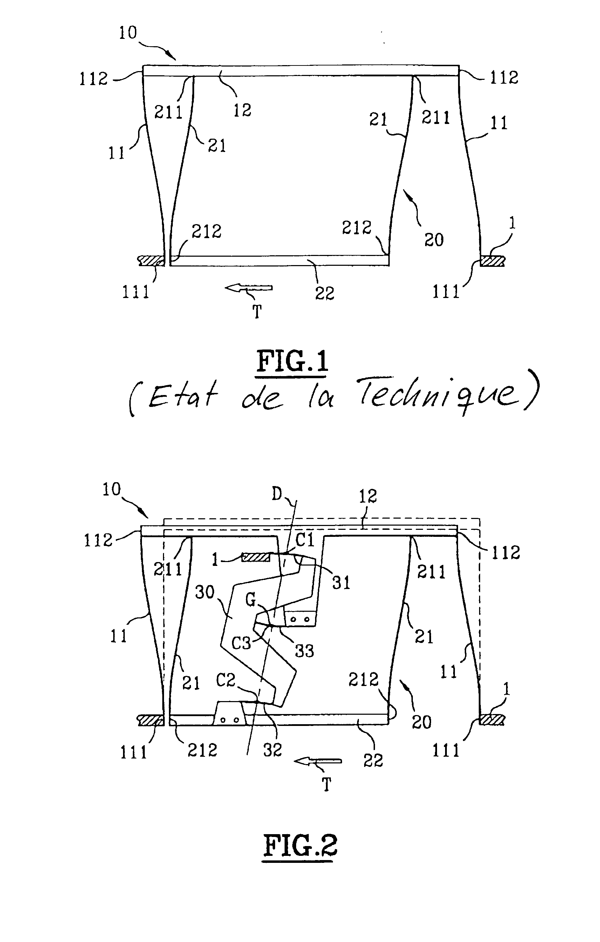

Pour remédier à cet inconvénient, il est connu d'améliorer le caractère rectiligne du mouvement de translation de l'objet mobile en introduisant un second parallélogramme de guidage conformément à la figure 1 qui est un schéma d'un dispositif de guidage en translation rectiligne de l'état de la technique.

En résumé, le dispositif de guidage de la figure 1 comprend un premier parallélogramme intermédiaire 10 constitué par deux lames intermédiaires 11 flexibles dans la direction T de translation, fixées à une extrémité 111 à une base fixe 1, solidaire dudit objet fixe, et à une autre extrémité 112 à un élément rigide intermédiaire 12 parallèle à la direction T de translation. Le deuxième parallélogramme 20 est le parallélogramme de guidage, monté en série à l'intérieur du premier, mais opposé, de manière que les deux erreurs de déplacement transversal se compensent. Plus précisément, le parallélogramme 20 de guidage comprend deux lames 21 de guidage flexibles dans la direction T de translation, fixées à une extrémité 211 à l'élément rigide intermédiaire 12 et à une autre extrémité 212 à un élément rigide 22 de guidage, également parallèle à la direction T.

Cependant, bien qu'il permette dans une large mesure de compenser les erreurs de déplacement latéral du parallélogramme simple, le dispositif de guidage connu montré sur la figure 1 présente encore deux inconvénients:
- la précision de guidage compensé est très sensible à la position longitudinale de l'élément rigide 12 intermédiaire dont la translation, lorsque les lames flexibles 11 et 21 des parallélogrammes 10 et 20 sont de longueur égale, doit être exactement égale à la moitié de la translation de l'élément rigide 22 de guidage;
- attachée uniquement aux lames 11 et 21 dont la rigidité dans la direction T de translation est faible, l'élément rigide 12 intermédiaire présente un mode de résonance à basse fréquence, excitable dans le mouvement de translation, qui limite les performances dynamiques du dispositif.

Afin de résoudre ces difficultés, il a été proposé de relier les deux éléments rigides 12 et 22 de translation à un dispositif externe de réduction du mouvement dans lequel l'élément 12 intermédiaire est mû en translation par un pignon engrenant avec un pignon de rayon double actionnant le mouvement de translation de l'élément 22 de guidage. On garantit ainsi le rapport 2 devant exister entre les déplacements respectifs des éléments intermédiaires et de guidage.

Pourtant, un tel dispositif connu n'est guère réalisable en pratique, à cause de sa complexité, de son encombrement, ainsi que des efforts non linéaires de frottement et de jeu introduits par le réducteur.

Aussi, le problème technique à résoudre par l'objet de la présente invention est de proposer un dispositif de guidage en translation rectiligne dans une direction donnée d'un objet mobile par rapport à un objet fixe, comprenant:
- un premier parallélogramme, dit intermédiaire, comportant, d'une part, une paire de lames flexibles dans la direction de translation, dites lames intermédiaires, sensiblement égales et parallèles entre elles, chacune desdites lames intermédiaires étant encastrée à une première extrémité dans une base fixe, solidaire dudit objet fixe, et, d'autre part, un élément rigide intermédiaire, parallèle à la direction de translation, fixé à chacune de ses extrémités à une deuxième extrémité des lames intermédiaires;
- un deuxième parallélogramme, dit de guidage, opposé au premier parallélogramme et comportant, d'une part, une paire de lames flexibles dans la direction de translation, dites lames de guidage, sensiblement égales et parallèles entre elles et aux lames intermédiaires, chacune desdites lames de guidage étant fixée à une première extrémité audit élément rigide intermédiaire, et, d'autre part, un élément rigide de guidage, parallèle à la direction de translation, solidaire dudit objet mobile et fixé à chacune de ses extrémités à une deuxième extrémité des lames de guidage, dispositif de guidage qui est compatible avec une réduction d'un demi du mouvement de l'élément rigide intermédiaire par rapport au mouvement de l'élément rigide de guidage, d'une manière simple, efficace, sans jeu et sans frottement.

La solution au problème technique posé consiste, selon la présente invention, en ce que ledit dispositif de guidage comporte un levier de réduction de mouvement fixé:
- à une première extrémité, à ladite base fixe au moyen d'une première lame flexible de réduction;
- à une deuxième extrémité, à l'élément rigide de guidage au moyen d'une deuxième lame flexible de réduction;
- en son milieu, à l'élément rigide intermédiaire au moyen d'une troisième lame flexible de réduction.

Les lames de réduction ont pour objet de transmettre les mouvements longitudinaux relatifs de la manière la plus rigide possible, tout en accomodant par leur flexibilité les erreurs de déplacement latéral de chaque parallélogramme.

Ainsi, on obtient la réduction des mouvements recherchée par la mise en oeuvre de la technologie des articulations élastiques avec tous ses avantages, à savoir précision, reproductibilité, absence de jeu, de frottement, d'usure et de grippage.

De plus, grâce au couplage rigide introduit par le levier de réduction entre les deux éléments mobiles, la fréquence du mode de résonance de l'élément mobile intermédiaire se trouve considérablement augmentée, ce qui augmente du même coup la bande de fréquence du dispositif de guidage de l'invention.

Selon une caractéristique avantageuse du dispositif de guidage de l'invention, en position de repos dudit dispositif de guidage, les centres des trois lames flexibles de réduction sont alignés selon une droite perpendiculaire à la direction de translation.

L'alignement des centres minimalise la dépendance du rapport de réduction en fonction de la déflexion. La perpendicularité minimalise la déformation des lames de réduction en fonction de la déflexion.

Il y a alors avantage à ce que, conformément à l'invention, le centre de gravité dudit levier de réduction soit situé sur la droite d'alignement des centres des trois lames flexibles de réduction. On obtient ainsi que le mode de résonance du levier sur les lames de réduction ne soit pas excité par le mouvement de translation.

Selon une autre caractéristique avantageuse du dispositif de guidage de l'invention, en position de repos dudit dispositif de guidage, les trois lames flexibles de réduction sont parallèles à la direction de translation, ceci de façon à rendre maximale la rigidité de couplage entre mouvements longitudinaux via le levier de réduction.

La description qui va suivre en regard des dessins annexés, donnés à titre d'exemples non limitatifs, fera bien comprendre en quoi consiste l'invention et comment elle peut être réalisée.
- la figure 2 est un schéma de principe du dispositif de guidage, objet de l'invention, en position déformée;
- la figure 3 est un schéma d'un mode particulier de réalisation du dispositif de guidage de l'invention en position de repos, et
- la figure 4 est un schéma en perspective cavalière montrant un dispositif de guidage, selon l'invention, dans lequel les lames intermédiaires et de guidage sont juxtaposées.

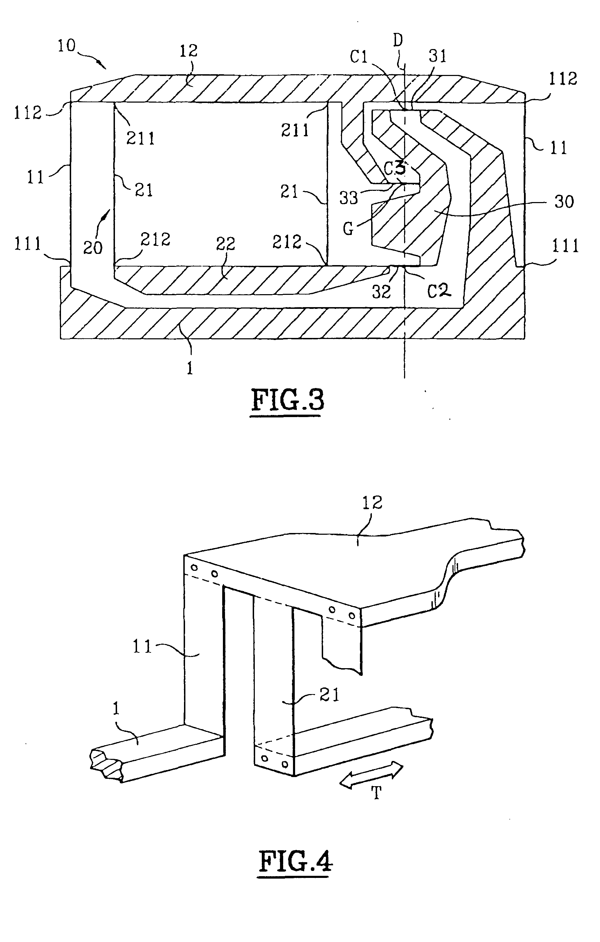

Sur les figures 2 et 3 est montré un dispositif de guidage en translation rectiligne dans une direction T donnée d'un objet mobile, non représenté mais solidaire d'un élément rigide 22 de guidage, par rapport à un objet fixe représenté par une base fixe 1.

Comme l'indiquent les figures 2 et 3, ledit dispositif de guidage comprend un premier parallélogramme 10 intermédiaire constitué de deux lames intermédiaires 11, flexibles dans la direction T de translation, égales et parallèles entre eux, et d'un élément rigide 12 intermédiaire, parallèle à la même direction T. Lesdites lames 11 sont fixées à une première extrémité 111 à la base fixe 1 et à une deuxième extrémité 112 aux extrémités de l'élément rigide 12.

On voit sur la figure 2 que sous l'effet d'une sollicitation extérieure le parallélogramme 10 passe d'une position de repos représentée en pointillés à une position déformée représentée en trait plein. Au cours de ce mouvement, l'élément rigide 12 se déplace majoritairement dans la direction T de translation rectiligne recherché, mais aussi, pour une moindre part, dans la direction perpendiculaire, lui étant dû au raccourcicement de la longueur effective des lames 10 perpendiculairement à la direction T.

Afin d'annuler cet effet parasite, le dispositif de guidage de l'invention comprend un deuxième parallèlogramme 20, dit de guidage, intérieur et opposé au parallélogramme intermédiaire 10, dont la fonction est d'annuler le déplacement transversal de l'élément intermédiaire 12 en produisant un déplacement transversal opposé sur un élément 22 de guidage, parallèle à la direction T de translation et solidaire de l'objet mobile, lequel ne subit alors globalement qu'un mouvement rectiligne parallèle à la direction T de translation.

Dans ce but, le parallélogramme 20 de guidage comporte une paire de lames flexibles 21 de guidage, sensiblement égales et parallèles entre elles et aux lames intermédiaires 11. Chaque lame 21 de guidage flexible dans la direction T de translation, est fixée à une première extrémité 211 à l'élément intermédiaire 12 et à une deuxième extrémité 212 dudit élément rigide 22 de guidage.

De manière à assurer un rapport de réduction d'un demi entre le déplacement de l'élément intermédiaire 12 et celui de l'élément 22 de guidage, le dispositif de guidage, objet de l'invention, comporte en outre un levier 30 de réduction de mouvement fixé:
- à une première extrémité, à la base fixe 1 au moyen d'une première lame flexible 31 de réduction,
- à une deuxième extrémité, à l'élément rigide 22 de guidage au moyen d'une deuxième lame flexible 32 de réduction,
- en son milieu, à l'élément rigide intermédiaire 12 au moyen d'une troisième lame flexible 33 de réduction.

Ainsi qu'on peut le voir plus particulièrement sur la figure 3, lorsque le dispositif de guidage est en position de repos, les centres C1, C2, C3 des trois lames flexibles 31, 32, 33 de réduction sont alignés selon une droite D perpendiculaire à la direction T de translation, ceci afin que le facteur de réduction reste sensiblement égal à un demi quelle que soit la déflexion desdites lames de réduction. On observera que sur la figure 2 que l'alignement des points C1, C2, C3 sur la droite D est maintenue, du moins tant que l'amplitude des déformations reste limitée.

La figure 3 montre également que, de manière à maximaliser la rigidité de réduction, les trois lames flexibles 31, 32, 33 de réduction sont parallèles à la direction T de translation, lorsque le dispositif de guidage est en position de repos.

Afin de découpler le mouvement de translation du mode de résonance du levier 30 de réduction sur les lames flexibles 31, 32, 33, il est prévu, comme l'indiquent les figures 2 et 3, que le centre G de gravité dudit levier 30 de réduction est situé sur la droite D d'alignement des centres C1, C2, C3 des trois lames 31, 32, 33 de réduction. On voit sur les figures 2 et 3 qui pour des raisons de symétrie le centre G de gravité du levier 30 coïncide sensiblement avec le centre C3 de la troisième lame 33 de réduction.

On remarquera également sur la figure 3 que le levier 30 de réduction de mouvement est disposé à l'extérieur du parallélogramme 20 de guidage, ce qui permet de placer dans l'espace intérieur audit parallélogramme du guidage, par exemple une plaque d'aimants d'un actionneur à aimants mobiles.

Dans une première forme de réalisation pratique, le levier 30 de réduction et les trois lames flexibles 31, 32, 33 peuvent former un bloc monolithique découpé dans une plaque d'un matériau élastique. De même, le dispositif de guidage conforme à l'invention tel que représenté sur la figure 3 peut également former dans son ensemble un bloc monolithique découpé dans une plaque d'un matériau élastique.

La description de l'invention a été réalisée avec un dispositif dans lequel le deuxième parallélogramme de guidage 20 est à l'intérieur du parallélogramme intermédiaire 10. Mais une telle disposition relative est montrée à titre d'exemple. En effet, les objets fixe et mobile peuvent être permutés, ce qui entraîne que les lames intérieures deviennent les lames extérieures et vice-versa. De plus, selon d'autres réalisations, les lames des deux parallélogrammes peuvent être juxtaposées comme le montre la figure 4. Ces lames intermédiaires et de guidage peuvent être réalisées dans une même membrane en un matériau élastique.

## Revendications

1. Dispositif de guidage en translation rectiligne dans une direction (T) donnée d'un objet mobile par rapport à un objet fixe, comprenant:
- un premier parallélogramme (10), dit intermédiaire, comportant, d'une part, une paire de lames flexibles (11) dans la direction (T) de translation, dites lames intermédiaires, sensiblement égales et parallèles entre elles, chacune desdites lames intermédiaires (11), étant encastrée à une première extrémité (111) dans une base fixe (1), solidaire dudit objet fixe, et, d'autre part, un élément rigide intermédiaire (12), parallèle à la direction (T) de translation, fixé à chacune de ses extrémités à une deuxième extrémité (112) des lames intermédiaires (11),
- un deuxième parallélogramme (20), dit de guidage, opposé au premier parallélogramme (10) et comportant, d'une part, une paire de lames flexibles (21) dans la direction de translation, dites lames de guidage, sensiblement égales et parallèles entre elles et aux lames intermédiaires (11), chacune desdites lames (21) de guidage étant fixée à une première extrémité (211) audit élément rigide intermédiaire (12), et, d'autre part, un élément rigide (22) de guidage, parallèle à la direction (T) de translation, solidaire dudit objet mobile et fixé à chacune de ses extrémités à une deuxième extrémité (212) des lames (21) de guidage, caractérisé en ce que ledit dispositif de guidage comporte un levier (30) de réduction de mouvement fixé:
- à une première extrémité, à ladite base fixe (1) au moyen d'une première lame flexible (31) de réduction,
- à une deuxième extrémité, à l'élément rigide (22) de guidage au moyen d'une deuxième lame flexible (32) de réduction,
- en son milieu, à l'élément rigide intermédiaire (12) au moyen d'une troisième lame flexible (33) de réduction.

2. Dispositif de guidage selon la revendication 1, caractérisé en ce que, en position de repos dudit dispositif de guidage, les centres (C1, C2, C3) des trois lames flexibles (31, 32, 33) de réduction sont alignés selon une droite (D) perpendiculaire à la direction (T) de translation.

3. Dispositif de guidage selon la revendication 2, caractérisé en ce que le centre (G) de gravité dudit levier (30) de réduction est situé sur la droite (D) d'alignement des centres (C1, C2, C3) des trois lames flexibles (31, 32, 33) de réduction.

4. Dispositif de guidage selon l'une quelconque des revendications 1 à 3, caractérisé en ce que, en position de repos dudit dispositif de guidage, les trois lames flexibles (31, 32, 33) de réduction sont parallèles à la direction (T) de translation.

5. Dispositif de guidage selon l'une quelconque des revendications 1 à 4, caractérisé en ce que ledit levier (30) de réduction de mouvement est disposé à l'extérieur du parallélogramme (20) de guidage.

6. Dispositif de guidage selon l'une quelconque des revendications 1 à 5, caractérisé en ce que ledit levier (30) de réduction de mouvement et les trois lames flexibles (31, 32, 33) de réduction forment un bloc monolithique découpé dans une plaque d'un matériau élastique.

7. Dispositif de guidage selon la revendication 6, caractérisé en ce que ledit dispositif de guidage dans son ensemble forme un bloc monolithique découpé dans une plaque d'un matériau élastique.

8. Dispositif de guidage selon l'une quelconque des revendications précédentes, caractérisé en ce que les lames intermédiaires et de guidage sont juxtaposées et réalisées dans une même membrane élastique.

## Patentansprüche

1. Führungsvorrichtung bei einer in einer Richtung (T) geradlinigen Verschiebung, die von einem beweglichen Objekt in bezug auf ein feststehendes Objekt gegeben ist, mit:
- einem ersten Zwischenparallelogramm (10) umfassend einerseits ein Paar Lamellen (11), die in der Verschiebungsrichtung (T) flexibel sind, wobei die Zwischenlamellen im wesentlichen gleich und zueinander parallel sind, wobei jede der Zwischenlamellen (11) mit einem ersten Ende (111) an einer feststehenden, mit dem feststehenden Objekt fest verbundenen Basis (1) angebracht ist, und andererseits ein starres, parallel zur Verschiebungsrichtung (T) liegendes Zwischenelement, das mit jedem seiner Enden an einem zweiten Ende (112) der Zwischenlamellen (11) befestigt ist,
- einem zweiten Führungsparallelogramm (20), das dem ersten Parallelogramm (10) gegenüberliegt und einerseits ein Paar Lamellen (21), die in Verschiebungsrichtung flexibel sind, wobei die Führungslamellen im wesentlichen gleich und parallel zueinander und zu den Zwischenlamellen (11) sind, wobei jede der Führungslamellen (21) mit einem ersten Ende (211) an dem starren Zwischenelement (12) befestigt ist, und andererseits ein starres, parallel zur Verschiebungsrichtung (T) liegendes Führungselement (22), das mit dem beweglichen Objekt fest verbunden und mit jedem seiner Enden an einem zweiten Ende (212) der Führungslamellen (21) befestigt ist, umfaßt, dadurch gekennzeichnet, daß die Führungsvorrichtung einen Hebel (30) zur Bewegungseinschränkung umfaßt, der
- mit einem ersten Ende an der feststehenden Basis (1) mittels einer ersten flexiblen Einschränkungslamelle (31),
- mit einem zweiten Ende an dem starren Führungselement (22) mittels einer zweiten flexiblen Einschränkungslamelle (32)
- in seiner Mitte an dem starren Zwischenelement (12) mittels einer dritten flexiblen Einschränkungslamelle
befestigt ist.

2. Führungsvorrichtung nach Anspruch 1, dadurch gekennzelchnet, daß in Ruhestellung der Führungsvorrichtung die Zentren (C1, C2, C3) der drei flexiblen Einschränkungslamellen (31, 32, 33) entlang einer Geraden (D) fluchtrecht liegen, die senkrecht zur Verschiebungsrichtung (T) liegt.

3. Führungsvorrichtung nach Anspruch 2, dadurch gekennzeichnet, daß der Schwerpunkt (G) des Einschränkungshebels (30) auf der Fluchtgeraden (D) der Zentren (Cl, C2, C3) der drei flexiblen Einschränkungslamellen (31, 32, 33) liegt.

4. Führungsvorrichtung nach einem der Ansprüche 1 bis 3, dadurch gekennzeichnet, daß in Ruhestellung der Führungsvorrichtung die drei flexiblen Einschränkungslamellen (31, 32, 33) parallel zur Verschiebungsrichtung (T) liegen.

5. Führungsvorrichtung nach einem der Ansprüche 1 bis 4, dadurch gekennzeichnet, daß der Bewegungseinschränkungshebel (30) außerhalb des Führungsparallelogramms (20) angeordnet ist.

6. Führungsvorrichtung nach einem der Ansprüche 1 bis 5, dadurch gekennzeichnet, daß der Bewegungseinschränkungshebel (30) und die drei flexiblen Einschränkungslamellen (31, 32, 33) eine feste monolithische Einheit bilden, die aus einer Platte aus elastischem Material ausgeschnitten ist.

7. Führungsvorrichtung nach Anspruch 6, dadurch gekennzeichnet, daß die Führungsvorrichtung in ihrer Gesamtheit eine feste monolithische Einheit bildet, die aus einer Platte aus elastischem Material ausgeschnitten ist.

8. Führungsvorrichtung nach einem der vorangegangenen Ansprüche, dadurch gekennzeichnet, daß die Zwischen- und Führungslamellen nebeneinander angeordnet und durch die gleiche elastische Membran gebildet sind.

## Claims

1. Device for guidance in rectilinear translation in a given direction (T) of an object which is mobile relative to a fixed object, comprising:
- a first, so-called intermediate parallelogram (10), including, on the one hand, a pair of strips (11) which are flexible in the direction (T) of translation, known as intermediate strips; substantially equal and parallel to each other, each of the said intermediate strips (11) being set at a first end (111) in a fixed base (1), firmly attached to the said fixed object, and, on the other, a rigid intermediate element (12), parallel to the direction (T) of translation, fixed at each of its ends to a second end (112) of the intermediate blades (11),
- a second, so-called guiding parallelogram (20), opposite to the first parallelogram (10) and including, on the one hand, a pair of strips (21) which are flexible in the direction of translation, known as guiding strips, substantially equal and parallel to each other and to the intermediate strips (11), each of the said guiding strips (21) being fixed at a first end (211) to the said intermediate rigid element (12), and, on the other, a rigid guiding element (22), parallel to the direction (T) of translation, firmly attached to the said mobile object and fixed at each of its ends to a second end (212) of the guiding strips (21), characterised by the fact that the said guidance device includes a lever (30) for reduction of movement fixed:
- at a first end, to the said fixed base (1) by means of a first flexible reduction strip (31),
- at a second end, to the rigid guiding element (22) by means of a second flexible reduction strip (32),
- at its middle, to the intermediate rigid element (12) by means of a third flexible reduction strip (33).

2. Guidance device as described in claim 1, characterised by the fact that, in the rest position of the said guidance device, the centres (C1, C2, C3) of the three flexible reduction strips (31, 32, 33) are aligned along a straight line (D) perpendicular to the direction (T) of translation.

3. Guidance device as described in claim 2, characterised by the fact that the centre of gravity (G) of the said reduction lever (30) is situated on the straight line (D) of alignment of the centres (C1, C2, C3) of the three flexible reduction strips (31, 32, 33).

4. Guidance device as described in any one of claims 1 to 3, characterised by the fact that, in the rest position of the said guidance device, the three flexible reduction strips (31, 32, 33) are parallel to the direction (T) of translation.

5. Guidance device as described in any one of claims 1 to 4, characterised by the fact that the said movement reduction lever (30) is arranged outside the guiding parallelogram (20).

6. Guidance device as described in any one of claims 1 to 5, characterised by the fact that the said movement reduction lever (30) and the three flexible reduction strips (31, 32, 33) form a unit in one piece cut out of a plate of an elastic material.

7. Guidance device as described in claim 6, characterised by the fact that the said guidance device as a whole forms a unit in one piece cut out of a plate of elastic material.

8. Guidance device as described in any one of the preceding claims, characterised by the fact that the intermediate and guiding strips are juxtaposed and formed in a same elastic membrane.
